# EUROPÄISCHE PATENTANMELDUNG

(11) **EP 3 401 698 A1**
(43) Veröffentlichungstag der Anmeldung: **14.11.2018**
(21) Anmeldenummer: 18165825.3
(22) Anmeldetag: 05.04.2018
(51) Int. Cl.: G01S 13/04, G01S 13/56, G01S 13/00, F24C 7/00, H04L 12/28, G01S 13/46

(54) **VERFAHREN ZUM BETREIBEN EINES HAUSHALTSGERÄTS**

(30) Priorität: 09.05.2017 DE 102017109935
(71) Anmelder: Miele & Cie. KG, 33332 Gütersloh (DE)
(72) Erfinder: Langhammer, Nils, 33415 Verl (DE)

(57) **Zusammenfassung**

Die Erfindung betrifft ein Verfahren zum Betreiben eines Haushaltsgeräts (12), mit den Schritten: Empfangen eines Funksignals von zumindest einer Funksendequelle (14) durch das Haushaltsgerät (12) und Bestimmen von Informationen zu der Umgebung des Haushaltsgeräts (12) durch Auswerten des zeitlichen Verlaufs eines auf dem Funksignal basierenden und durch die Umgebung des Haushaltsgeräts (12) beeinflussten Auswertesignals (24a-24c) durch das Haushaltsgerät (12).

## Beschreibung

Die Erfindung betrifft ein Verfahren zum Betreiben eines Haushaltsgeräts, mit dem Schritt: Empfangen eines Funksignals von zumindest einer Funksendequelle durch das Haushaltsgerät.

Außerdem betrifft die Erfindung eine Steuerungseinrichtung für ein Haushaltsgerät, mit einer Empfangseinheit, welche dazu eingerichtet ist, ein Funksignal von zumindest einer Funksendequelle zu empfangen.

Darüber hinaus betrifft die Erfindung ein Haushaltsgerät mit einer Steuerungseinrichtung sowie ein System mit einem Haushaltsgerät und zumindest einer von dem Haushaltsgerät entfernt angeordneten Funksendequelle.

Bei einer Vielzahl von Funktionen von Haushaltsgeräten werden Informationen zu der Umgebung des Haushaltsgeräts berücksichtigt. Bekannt sind beispielsweise Haushaltsgeräte, welche Bewegungen in der eigenen Umgebung erfassen und zur Steigerung des Bedienkomforts oder der Betriebssicherheit berücksichtigen. Zur Steigerung des Bedienkomforts kann beispielsweise bei Erfassung einer Bewegung in einem Nahbereich eines Haushaltsgeräts eine Anzeigenbeleuchtung aktiviert werden. Zur Steigerung der Betriebssicherheit können Haushaltsgeräte beispielsweise abgeschaltet werden, wenn über einen längeren Zeitraum keine Bewegung in der Umgebung des Haushaltsgeräts erfasst wurde.

Zur Erfassung von Umgebungsinformationen werden bei bekannten Haushaltsgeräten unterschiedliche Sensoren, wie beispielsweise Näherungssensoren, eingesetzt. Ferner sind Lösungen bekannt, bei welchen Umgebungsinformationen mittels einer oder mehrerer Kameras erfasst werden.

Der Einsatz von zusätzlicher Sensorik führt jedoch zu gesteigerten Hardwarekosten für das Haushaltsgerät. Außerdem ist die Installation und Kalibrierung der eingesetzten Sensorik häufig aufwändig und führt somit zu einer weiteren Kostensteigerung.

Die der Erfindung zugrunde liegende Aufgabe besteht somit darin, einem Haushaltgerät mit einem möglichst geringen Kostenaufwand die Erfassung von Umgebungsinformationen zu ermöglichen.

Die Aufgabe wird gelöst durch ein Verfahren der eingangs genannten Art, wobei durch das Haushaltsgerät Informationen zu der Umgebung des Haushaltsgeräts durch Auswerten des zeitlichen Verlaufs eines auf dem Funksignal basierenden und durch die Umgebung des Haushaltsgeräts beeinflussten Auswertesignals bestimmt werden.

Die Erfindung macht sich die Erkenntnis zunutze, dass durch die Auswertung des zeitlichen Verlaufs eines auf dem Funksignal basierenden und durch die Umgebung des Haushaltsgeräts beeinflussten Auswertesignals keine zusätzliche Sensorik notwendig ist, um dem Haushaltsgerät die Erfassung von Umgebungsinformationen zu ermöglichen. Die Erfassung von Umgebungsinformationen kann somit insbesondere bei Haushaltsgeräten, welche bereits über eine Empfangseinheit für Funksignale zur Kommunikation mit anderen Geräten verfügen, mit einem äußert geringen zusätzlichen Aufwand erfolgen, da zur Erfassung der Umgebungsinformationen Signale verwendet werden, welche dem Haushaltsgerät ohnehin aufgrund anderer Kommunikationsfunktionen zur Verfügung stehen.

Die Funksendequelle ist vorzugsweise als stationäre Funksendequelle ausgebildet oder führt zur Zeit des Aussendens des Funksignals keine Bewegung aus, wie beispielsweise ein temporär abgelegtes mobiles Endgerät. Das Auswertesignal kann dem empfangenen Funksignal entsprechen. Alternativ kann das Auswertesignal auf Grundlage des empfangenen Funksignals durch das Haushaltsgerät erzeugt werden, beispielsweise durch eine Verstärkung und/oder Glättung des empfangenen Funksignals. Das Auswertesignal kann durch eine Signalfilterung mittels eines Filters mit endlicher Impulsantwort erzeugt werden. Das Bestimmen von Informationen zu der Umgebung des Haushaltsgeräts kann auch durch Auswerten des zeitlichen Verlaufs mehrerer Auswertesignale durch das Haushaltsgerät erfolgen. Im Sinne Erfindung ist unter der Umgebung des Haushaltsgeräts eine geographische und insbesondere unmittelbare Umgebung des Haushaltsgeräts zu verstehen.

In einer bevorzugten Ausführungsform des erfindungsgemäßen Verfahrens ist die Umgebung des Haushaltsgeräts als Bereich definiert, innerhalb welchem es einem Benutzer des Haushaltsgeräts möglich ist, das Haushaltsgerät über dessen Bedienelemente lokal bedienen zu können. Beispielsweise beschränkt sich die Umgebung des Haushaltsgeräts auf Bereiche, in denen ein Benutzer das Haushaltsgerät berühren kann. Die Umgebung kann somit beispielsweise auch durch Wände, insbesondere Hauswände, oder andere räumliche Trennelemente begrenzt werden, welche ein Bedienen und/oder Berühren des Haushaltsgeräts verhindern. Alternativ kann die Umgebung des Haushaltsgeräts auch durch eine Maximalentfernung zu dem Haushaltsgerät begrenzt werden, wobei die Maximalentfernung vorzugsweise in einem Bereich von 1 Meter bis 10 Metern liegt.

In einer anderen bevorzugten Ausführungsform des erfindungsgemäßen Verfahrens umfasst das Auswerten des zeitlichen Verlaufs des Auswertesignals eine Untersuchung des Auswertesignals auf einen Mehrwegeempfang und/oder auf Eigenschaften eines Mehrwegeempfangs. Das von der Funksendequelle ausgesendete Signal kann das Haushaltsgerät einerseits auf dem direkten Weg und andererseits aufgrund von Signalablenkungen durch Objekte über weitere Wege erreichen. Aus diesem Grund empfängt das Haushaltsgerät durch den Mehrwegeempfang ein vermischtes Signal, aus dessen Eigenschaften Umgebungsinformationen abgeleitet werden können.

In einer bevorzugten Weiterbildung des erfindungsgemäßen Verfahrens umfasst das Auswerten des zeitlichen Verlaufs des Auswertesignals das Erfassen einer Reflexion, einer Brechung, einer Streuung, einer Beugung, einer Dämpfung und/oder einer Verstärkung des Funksignals durch ein Objekt in der Umgebung des Haushaltsgeräts vor dem Empfang durch das Haushaltsgerät. Durch eine Reflexion, eine Brechung, eine Streuung, eine Beugung, eine Dämpfung und/oder eine Verstärkung des von der Funksendequelle ausgesendeten Funksignals kann das Funksignal mehrfach, zeitlich versetzt und/oder mit unterschiedlicher Intensität von dem Haushaltsgerät empfangen werden. Durch eine geeignete Auswerteroutine können die bezeichneten Effekte erkannt und in Umgebungsinformationen umgewandelt werden.

Bevorzugt ist außerdem ein erfindungsgemäßes Verfahren, bei welchem das Bestimmen von Informationen zu der Umgebung des Haushaltsgeräts das Erfassen der Präsenz eines Objekts in der Umgebung des Haushaltsgeräts, das Erfassen einer Bewegung eines Objekts in der Umgebung des Haushaltsgeräts und/oder das Lokalisieren eines Objekts in der Umgebung des Haushaltsgeräts umfasst. Alternativ oder zusätzliche kann das Bestimmen von Informationen zu der Umgebung des Haushaltsgeräts das Identifizieren eines Objekts in der Umgebung des Haushaltsgeräts, das Erfassen eines Objektzustands eines Objekts in der Umgebung des Haushaltsgeräts und/oder das Erfassen einer Zustandsänderung in der Umgebung des Haushaltsgeräts umfassen. Das Objekt kann beispielsweise ein beweglicher oder stationärer Gegenstand sein. Alternativ oder zusätzlich kann das Objekt auch eine Person, insbesondere ein Benutzer des Haushaltsgeräts, sein. Das Erfassen einer Bewegung eines Objekts in der Umgebung des Haushaltsgeräts kann beispielsweise das Erfassen einer sich dem Haushaltsgerät nähernden Person, das Erfassen einer sich von dem Haushaltsgerät entfernenden Person und/oder das Erfassen einer oder mehrerer Gesten einer Person umfassen. Das Lokalisieren eines Objekts in der Umgebung des Haushaltsgeräts kann beispielsweise das Erfassen der Richtung einer Person relativ zu dem Haushaltsgerät und/oder das Erfassen des Abstands einer Person zu dem Haushaltsgerät umfassen. Das Identifizieren eines Objekts in der Umgebung des Haushaltsgeräts kann beispielsweise das Identifizieren einer Person umfassen, insbesondere auf Grundlage eines erfassten Bewegungsmusters. Das Erfassen eines Objektzustands eines Objekts in der Umgebung des Haushaltsgeräts kann beispielsweise das Erfassen eines Öffnungszustands eines Fensters und/oder einer Tür in der Umgebung des Haushaltsgeräts umfassen.

In einer anderen bevorzugten Ausführungsform umfasst das erfindungsgemäße Verfahren das Erzeugen des Auswertesignals auf Grundlage des empfangenen Funksignals. Das Erzeugen des Auswertesignals auf Grundlage des empfangenen Funksignals umfasst vorzugsweise das Untersuchen eines Indikatorwertes für die Empfangsstärke des empfangenen Funksignals, das Berechnen eines Kanalprofils des empfangenen Funksignals und/oder das Untersuchen der zeitlichen Veränderung des Kanalprofils. Alternativ oder zusätzlich kann das Erzeugen des Auswertesignals auf Grundlage des empfangenen Funksignals das Invertieren des Kanalprofils des empfangenen Funksignals und/oder das Untersuchen der zeitlichen Veränderung des invertierten Kanalprofils umfassen. Beispielsweise ist das Auswertesignal der Receive Signal Strength Indicator (RSSI) Wert des empfangenen Funksignals. Außerdem kann das Auswertesignal ein auf Basis des empfangenen Funksignals erzeugter Equalizer-Wert sein.

In einer vorteilhaften Weiterbildung umfasst das erfindungsgemäße Verfahren das selbsttätige Steuern des Haushaltsgeräts auf Grundlage der erfassten Informationen zu der Umgebung des Haushaltsgeräts. Beispielsweise umfasst das selbsttätige Steuern des Haushaltsgeräts auf Grundlage der erfassten Informationen zu der Umgebung des Haushaltsgeräts das selbststätige Ein- und Ausschalten des Haushaltsgeräts in Abhängigkeit der Erfassung einer Person in einem Nahbereich des Haushaltsgeräts. Hierbei soll verstanden werden, dass das Einschalten des Haushaltsgeräts auch bedeuten kann, dass die Bedienung des Haushaltsgeräts zugelassen wird, und dass das Ausschalten des Haushaltsgeräts auch bedeuten kann, dass das Haushaltsgerät in einen sicheren und/oder nicht-bedienbaren Zustand versetzt wird. Beispielsweise ist das Haushaltsgerät ein Kochfeld und in dem sicheren Zustand werden alle Kochzonen auf Warmhalten gestellt. Beispielsweise umfasst das Haushaltsgerät eine Dunstabzugshaube, wobei das selbsttätige Steuern des Haushaltsgeräts auf Grundlage der erfassten Informationen zu der Umgebung des Haushaltsgeräts das selbststätige Ein- und Ausschalten der Dunstabzugshaube in Abhängigkeit von einem Öffnungszustand eines Fensters umfasst. Beispielsweise kann über das selbsttätige Steuern des Haushaltsgeräts auf Grundlage der erfassten Informationen zu der Umgebung des Haushaltsgeräts eine Gestensteuerung umgesetzt werden. Beispielsweise umfasst das selbsttätige Steuern des Haushaltsgeräts auf Grundlage der erfassten Informationen zu der Umgebung des Haushaltsgeräts das selbststätige Anpassen von Anzeigeeinstellungen einer Anzeige, wie etwa die Schriftgröße, und/oder das selbsttätige Anpassen der Lautstärke einer akustischen Wiedergabe durch das Haushaltsgerät in Abhängigkeit von der Entfernung eines Benutzers von dem Haushaltsgerät.

In einer anderen Ausführungsform des erfindungsgemäßen Verfahrens ist das Funksignal zur Übertragung innerhalb eines lokalen Funknetzes ausgebildet und/oder entspricht dem IEEE 802.11-Standard, dem IEEE 802.154-Standard oder dem Bluetooth-Standard. Insbesondere wird das Funksignal von einem zumindest temporär stationären WLAN-Router, einem anderen Haushaltsgerät oder einem Mobiltelefon ausgesendet. Eine Vielzahl von Funksignalen entspricht dem IEEE 802.11-Standard, dem IEEE 802.154-Standard und/oder dem Bluetooth-Standard. Somit kann das Verfahren in vielen unterschiedlichen aber alltäglichen Umgebungen ausgeführt werden.

Das erfindungsgemäße Verfahren wird ferner dadurch weitergebildet, dass das Haushaltsgerät lokale Bedienhandlungen eines Benutzers an dem Haushaltsgerät erfasst, wobei das Bestimmen von Informationen zu der Umgebung des Haushaltsgeräts zusätzlich durch Auswerten der erfassten lokalen Bedienhandlungen erfolgt. Die lokalen Bedienhandlungen des Benutzers an dem Haushaltsgerät können beispielsweise eine Tastenbedienung beziehungsweise eine Tastenbetätigung an dem Haushaltsgerät durch den Benutzer umfassen. Auf diese Weise kann zuverlässig ein Zustand und/oder eine Veränderung des Auswertesignals erfasst werden, welche(r) durch eine sich innerhalb der Umgebung des Haushaltsgeräts befindliche Person verursacht wurde. Somit kann eine Lernfunktion umgesetzt werden, welche es dem Haushaltsgerät erlaubt, Zustände und/oder Veränderungen des Auswertesignals als von einer sich in der Umgebung des Haushaltsgeräts befindlichen Person verursacht zu bewerten.

Die der Erfindung zugrunde liegende Aufgabe wird außerdem durch eine Steuerungseinrichtung der eingangs genannten Art gelöst, wobei die Steuerungseinrichtung eine Auswerteeinheit aufweist, welche dazu eingerichtet ist, den zeitlichen Verlauf eines auf dem Funksignal basierenden und durch die Umgebung des Haushaltsgeräts beeinflussten Auswertesignals zum Bestimmen von Informationen zu der Umgebung des Haushaltsgeräts auszuwerten.

In einer besonders bevorzugten Ausführungsform der erfindungsgemäßen Steuerungseinrichtung ist die Steuerungseinrichtung zum Ausführen eines Verfahrens zum Betreiben eines Haushaltsgeräts nach einer der vorstehend beschriebenen Ausführungsformen ausgebildet. Hinsichtlich der Vorteile und Modifikationen der erfindungsgemäßen Steuerungseinrichtung wird auf die Vorteile und Modifikationen des erfindungsgemäßen Verfahrens verwiesen.

Die der Erfindung zugrunde liegende Aufgabe wird ferner durch ein Haushaltsgerät der eingangs genannten Art gelöst, wobei die Steuerungseinrichtung nach einem der vorstehend beschriebenen Ausführungsformen ausgebildet ist. Hinsichtlich der Vorteile und Modifikationen des erfindungsgemäßen Haushaltsgeräts wird auf die Vorteile und Modifikationen des erfindungsgemäßen Verfahrens verwiesen.

Darüber hinaus wird die der Erfindung zugrunde liegende Aufgabe durch ein System der eingangs genannten Art gelöst, wobei das Haushaltsgerät nach einer der vorstehend beschriebenen Ausführungsformen ausgebildet ist. Hinsichtlich der Vorteile und Modifikationen des erfindungsgemäßen Systems wird auf die Vorteile und Modifikationen des erfindungsgemäßen Verfahrens verwiesen. Die Funksendequelle kann dabei als Funksender eines lokalen Funknetzes und/oder als Funksender, welcher zur Aussendung eines dem IEEE 802.11-Standard, dem IEEE 802.154-Standard oder dem Bluetooth-Standard entsprechenden Funksignals eingerichtet ist, ausgebildet sein. Die Funksendequelle kann auch als Sendemodul ausgebildet sein, welches in einem Raum eines Gebäudes positioniert ist und/oder auf dem Bluetooth Low Energy-Standard basiert. Eins solches Sendemodul kann ein auf der Beacon-Technologie basierendes Sendemodul sein, welches insbesondere dazu eingerichtet ist, nachträglich in Raumstrukturen integriert zu werden. Beispielsweise weist das Sendemodul einen Befestigungsabschnitt zur Befestigung an einer Raumwand auf, wobei der Befestigungsabschnitt Klebemittel aufweisen kann.

Das System kann auch mehrere Haushaltsgeräte umfassen, welche empfangene Funksignale, erzeugte Auswertesignale und/oder Informationen zu deren Umgebung untereinander austauschen. Dies führt zu weiteren räumlichen Informationen, über welche beispielsweise Triangulationsoperationen durchgeführt und dadurch realistische Bewegungsprofile erstellt werden können.

Weitere Merkmale und Details der Erfindung sind der nachfolgenden Figurenbeschreibung und den Ansprüchen zu entnehmen. Es zeigen
- Fig. 1: ein Ausführungsbeispiel des erfindungsgemäßen Systems in einer schematischen Darstellung; und
- Fig. 2: ein Ausführungsbeispiel des erfindungsgemäßen Haushaltsgeräts in einer schematischen Darstellung.

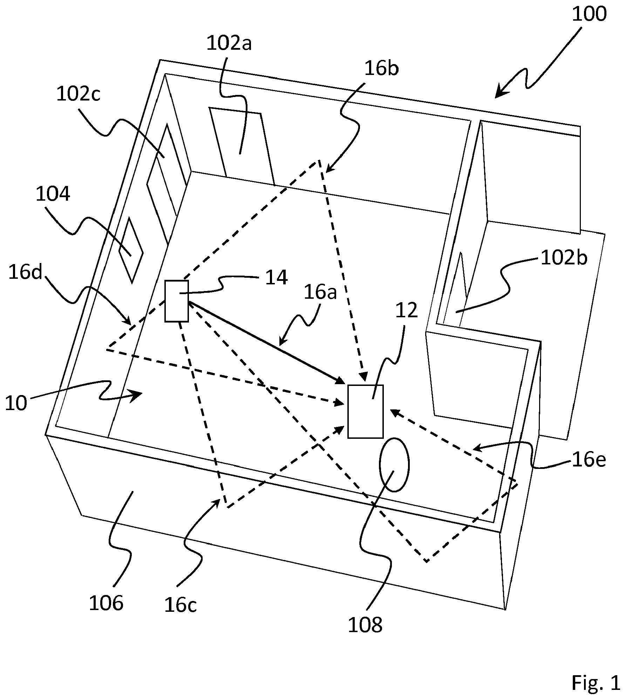

Fig. 1 zeigt ein System 10 mit einem Haushaltsgerät 12 und einer von dem Haushaltsgerät 12 entfernt angeordneten Funksendequelle 14.

Das System 10 ist innerhalb eines Raums 100 positioniert. Die Funksendequelle 14 ist als WLAN Router ausgebildet und sendet Funksignale aus. Die von der Funksendequelle 14 ausgesendeten Funksignale sind zur Übertragung innerhalb eines lokalen Funknetzes ausgebildet und entsprechen dem IEEE 802.11-Standard. Die von der Funksendequelle 14 ausgesendeten Funksignale werden von dem Haushaltsgerät 12 empfangen.

Die von dem Haushaltsgerät 12 empfangenen Funksignale erreichen das Haushaltsgerät 12 über unterschiedliche Signalwege 16a-16e. Der Signalweg 16a entspricht der direkten Übertragung zwischen der Funksendequelle 14 und dem Haushaltsgerät 12. Die Signalwege 16b-16e umfassen eine Reflexion durch eine Wand des 106 Raums 100.

Das Haushaltsgerät 12 ist dazu eingerichtet, den zeitlichen Verlauf eines auf dem Funksignal basierenden und durch die Umgebung des Haushaltsgeräts 12 beeinflussten Auswertesignals zum Bestimmen von Informationen zu der Umgebung des Haushaltsgeräts 12 auszuwerten.

Hierzu untersucht das Haushaltsgerät 12 das Auswertesignal auf Eigenschaften eines Mehrwegeempfangs. Das Haushaltsgerät 12 ist dazu ausgebildet, Reflexionen, Brechungen, Streuungen, Beugungen, Dämpfungen und Verstärkungen des Funksignals durch ein Objekt in der Umgebung des Haushaltsgeräts 12 erfassen.

In der Umgebung des Haushaltsgeräts 12 sind die als Türen ausgebildeten Objekte 102a-102c, das als Fenster ausgebildete Objekt 104 und das Objekt 108 angeordnet, wobei das Objekt 108 ein das Haushaltsgerät 12 bedienender Benutzer ist.

Das Haushaltsgerät 12 ist durch Auswerten des zeitlichen Verlaufs des Auswertesignals dazu in Lage, den Öffnungszustand der Objekte 102a-102c, 104 zu erfassen. Darüber hinaus kann durch das Auswerten des zeitlichen Verlaufs des Auswertesignals der Benutzer 108 lokalisiert und identifiziert werden. Außerdem kann das Haushaltsgerät 12 durch Auswerten des Auswertesignals Bewegungen des Benutzers 108 erfassen. Darüber hinaus werden lokale Bedienhandlungen des Benutzers 108 an dem Haushaltsgerät 12, wie etwa die Betätigung einer Gerätetaste, erfasst und beim Bestimmen von Informationen zu der Umgebung des Haushaltsgeräts 12 zusätzlich berücksichtigt. Dies ermöglicht eine Lernfunktion, welche es dem Haushaltsgerät 12 erlaubt, Zustände und Veränderungen des Auswertesignals als von einer sich in der Umgebung des Haushaltsgeräts 12 befindlichen Person verursacht zu bewerten.

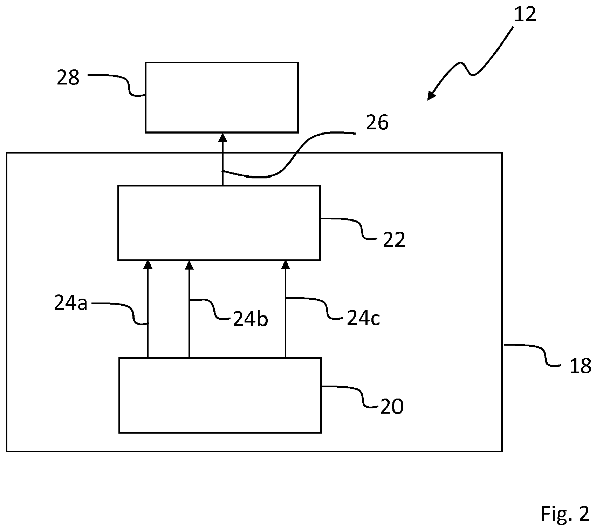

Die Fig. 2 zeigt ein Haushaltsgerät 12 mit einer Steuerungseinrichtung 18. Die Steuerungseinrichtung 18 umfasst eine Empfangseinheit 20 und eine Auswerteeinheit 22.

Die Empfangseinheit 20 ist dazu eingerichtet, ein Funksignal von einer Funksendequelle zu empfangen. Die Auswerteeinheit 22 ist dazu eingerichtet, den zeitlichen Verlauf von drei unterschiedlichen auf dem Funksignal basierenden und durch die Umgebung des Haushaltsgeräts 12 beeinflussten Auswertesignalen 24a-24c zum Bestimmen von Informationen zu der Umgebung des Haushaltsgeräts 12 auszuwerten.

Hierzu erzeugt die Steuerungseinrichtung 18 auf Grundlage des empfangenen Funksignals die drei Auswertesignale 24a-24c. Das Auswertesignal 24a ist der Receive Signal Strength Indicator (RSSI) Wert. Der RSSI-Wert wird aus einem Vorverstärkungsfaktor und dem empfangenen Funksignal erzeugt. Das Auswertesignal 24b ist ein Equalizer-Wert. Dieser wird durch Erzeugen und Invertieren des Kanalprofils des empfangenen Funksignals generiert. Das Auswertesignal 24c kann beispielsweise das empfangene Funksignal oder ein anderes auf Grundlage des empfangenen Funksignals erzeugtes Signal sein.

Die Auswerteeinheit 22 erzeugt auf Grundlage der aus dem Funksignal abgeleiteten Informationen zu der Umgebung des Haushaltsgeräts 12 einen Steuerungsbefehl 26 für eine Funktionseinheit 28 des Haushaltsgeräts12, sodass die Funktionseinheit 28 des Haushaltsgeräts 12 auf Grundlage der erfassten Informationen zu der Umgebung des Haushaltsgeräts 12 selbsttätig gesteuert wird. Die Funktionseinheit 28 kann beispielsweise ein Display, ein Lautsprecher oder ein Modul zur Leistungsversorgung des Haushaltsgeräts 12 sein.

### Bezugszeichenliste

- 10: System
- 12: Haushaltsgerät
- 14: Funksendequelle
- 16a-16e: Signalwege
- 18: Steuerungseinrichtung
- 20: Empfangseinheit
- 22: Auswerteeinheit
- 24a-24c: Auswertesignale
- 26: Steuerungsbefehl
- 28: Funktionseinheit

- 100: Raum
- 102a-102c: Objekte
- 104: Objekt
- 106: Wand
- 108: Objekt

## Patentansprüche

1. Verfahren zum Betreiben eines Haushaltsgeräts (12), mit den Schritten:
- Empfangen eines Funksignals von zumindest einer Funksendequelle (14) durch das Haushaltsgerät (12); und
- Bestimmen von Informationen zu der Umgebung des Haushaltsgeräts (12) durch Auswerten des zeitlichen Verlaufs eines auf dem Funksignal basierenden und durch die Umgebung des Haushaltsgeräts (12) beeinflussten Auswertesignals (24a-24c) durch das Haushaltsgerät (12);
**dadurch gekennzeichnet, dass** das Funksignal zur Übertragung innerhalb eines lokalen Funknetzes ausgebildet ist und/oder dem IEEE 802.11-Standard, dem IEEE 802.154-Standard oder dem Bluetooth-Standard entspricht.

2. Verfahren nach Anspruch 1,
**dadurch gekennzeichnet, dass** die Umgebung des Haushaltsgeräts (12) als Bereich definiert ist, innerhalb welchem es einem Benutzer des Haushaltsgeräts (12) möglich ist, das Haushaltsgerät (12) über dessen Bedienelemente lokal bedienen zu können.

3. Verfahren nach Anspruch 1 oder 2,
**dadurch gekennzeichnet, dass** das Auswerten des zeitlichen Verlaufs des Auswertesignals (24a-24c) eine Untersuchung des Auswertesignals (24a-24c) auf einen Mehrwegeempfang und/oder auf Eigenschaften eines Mehrwegeempfangs umfasst.

4. Verfahren nach einem der vorstehenden Ansprüche,
**dadurch gekennzeichnet, dass** das Auswerten des zeitlichen Verlaufs des Auswertesignals (24a-24c) das Erfassen einer Reflexion, einer Brechung, einer Streuung, einer Beugung, einer Dämpfung und/oder einer Verstärkung des Funksignals durch ein Objekt (102a-102c, 104, 108) in der Umgebung des Haushaltsgeräts (12) vor dem Empfang durch das Haushaltsgerät (12) umfasst.

5. Verfahren nach einem der vorstehenden Ansprüche,
**dadurch gekennzeichnet, dass** das Bestimmen von Informationen zu der Umgebung des Haushaltsgeräts (12) zumindest einen der folgenden Schritte umfasst:
- Erfassen der Präsenz eines Objekts (102a-102c, 104, 108) in der Umgebung des Haushaltsgeräts (12);
- Erfassen einer Bewegung eines Objekts (102a-102c, 104, 108) in der Umgebung des Haushaltsgeräts (12);
- Lokalisieren eines Objekts (102a-102c, 104, 108) in der Umgebung des Haushaltsgeräts (12);
- Identifizieren eines Objekts (102a-102c, 104, 108) in der Umgebung des Haushaltsgeräts (12);
- Erfassen eines Objektzustands eines Objekts (102a-102c, 104, 108) in der Umgebung des Haushaltsgeräts (12);
- Erfassen einer Zustandsänderung in der Umgebung des Haushaltsgeräts (12).

6. Verfahren nach einem der vorstehenden Ansprüche,
**gekennzeichnet durch** den Schritt:
- Erzeugen des Auswertesignals (24a-24c) auf Grundlage des empfangenen Funksignals, wobei das Erzeugen des Auswertesignals (24a-24c) auf Grundlage des empfangenen Funksignals vorzugsweise zumindest einen der folgenden Schritte umfasst:
- Untersuchen eines Indikatorwertes für die Empfangsstärke des empfangenen Funksignals;
- Berechnen eines Kanalprofils des empfangenen Funksignals;
- Untersuchen der zeitlichen Veränderung des Kanalprofils;
- Invertieren des Kanalprofils des empfangenen Funksignals;
- Untersuchen der zeitlichen Veränderung des invertierten Kanalprofils.

7. Verfahren nach einem der vorstehenden Ansprüche,
**gekennzeichnet durch** den Schritt:
- selbsttätiges Steuern des Haushaltsgeräts (12) auf Grundlage der erfassten Informationen zu der Umgebung des Haushaltsgeräts (12).

8. Verfahren nach einem der vorstehenden Ansprüche,
**gekennzeichnet durch** den Schritt:
- Erfassen von lokalen Bedienhandlungen eines Benutzers an dem Haushaltsgerät (12) durch das Haushaltsgerät (12);
wobei das Bestimmen von Informationen zu der Umgebung des Haushaltsgeräts (12) zusätzlich durch Auswerten der erfassten lokalen Bedienhandlungen erfolgt.

9. Steuerungseinrichtung (18) für ein Haushaltsgerät (12), mit
- einer Empfangseinheit (20), welche dazu eingerichtet ist, ein Funksignal von zumindest einer Funksendequelle (14) zu empfangen, **gekennzeichnet durch** eine Auswerteeinheit (22), welche dazu eingerichtet ist, den zeitlichen Verlauf eines auf dem Funksignal basierenden und durch die Umgebung des Haushaltsgeräts (12) beeinflussten Auswertesignals (24a-24c) zum Bestimmen von Informationen zu der Umgebung des Haushaltsgeräts (12) auszuwerten.

10. Steuerungseinrichtung (18) nach Anspruch 9,
**dadurch gekennzeichnet, dass** die Steuerungseinrichtung (18) zum Ausführen eines Verfahrens zum Betreiben eines Haushaltsgeräts (12) nach einem der Ansprüche 1 bis 8 ausgebildet ist.

11. Haushaltsgerät (12), mit
- einer Steuerungseinrichtung (18),
**dadurch gekennzeichnet, dass** die Steuerungseinrichtung (18) nach einem der Ansprüche 9 oder 10 ausgebildet ist.

12. System (10), mit
- einem Haushaltsgerät (12); und
- zumindest einer von dem Haushaltsgerät (12) entfernt angeordneten Funksendequelle (14);
**dadurch gekennzeichnet, dass** das Haushaltsgerät (12) nach Anspruch 11 ausgebildet ist.
